(19) Europäisches Patentamt
European Patent Office
Office européen des brevets

(11) **EP 4 524 293 A1**

(12) **EUROPEAN PATENT APPLICATION**
published in accordance with Art. 153(4) EPC

(43) Date of publication:
**19.03.2025 Bulletin 2025/12**

(21) Application number: 23755319.3

(22) Date of filing: **30.03.2023**

(51) International Patent Classification (IPC):
*C25D 5/00* (2006.01)     *C25D 3/38* (2006.01)
*C25D 1/04* (2006.01)

(52) Cooperative Patent Classification (CPC):
**C25D 3/38; C25D 1/04; C25D 5/00; C25D 7/06;**
**Y02E 60/10**

(86) International application number:
**PCT/KR2023/004288**

(87) International publication number:
**WO 2023/219269 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.05.2022  KR 20220057727**

(71) Applicants:
• **Korea Zinc Co., Ltd.**
  **Seoul 03159 (KR)**
• **KZAM Corporation**
  **Ulju-gun, Ulsan 45011 (KR)**

(72) Inventors:
• **KIM, Jeong Hwan**
  **Ulsan 44661 (KR)**
• **HEO, Sae Kwon**
  **Ulsan 44661 (KR)**
• **HU, Gyun**
  **Ulsan 44661 (KR)**

(74) Representative: **Angerhausen, Christoph**
**Boehmert & Boehmert**
**Anwaltspartnerschaft mbB**
**Pettenkoferstrasse 22**
**80336 München (DE)**

(54) **METHOD FOR CONTROLLING PROPERTIES OF ELECTROLYTIC COPPER FOIL, AND MANUFACTURING METHOD THEREFOR**

(57)    A method of controlling physical properties of an electrolytic copper foil according to one embodiment of the present invention includes: controlling the physical properties of the electrolytic copper foil including elongation, tensile strength and roughness by regulating a surface glossiness of the electrolytic copper foil through addition of a surface glossiness agent. The surface glos-siness is regulated within a range of 35 to 400 GU (60°).

FIG. 1

Surface glossiness (M)-Elongation

**Description**

TECHNICAL FIELD

The present invention relates to a method of controlling physical properties of an electrolytic copper foil, and a method for manufacturing an electrolytic copper foil, which are capable of easily controlling major physical properties such as tensile strength, elongation, roughness, and the like by regulating only the surface glossiness of the electrolytic copper foil.

BACKGROUND

Recently, as the demand for secondary batteries required for the mobile device industry such as electric vehicles and mobile phones has explosively increased, the demand for copper foils required for lithium secondary batteries having a high energy density and stability is also rapidly increasing. Accordingly, a copper foil, which is a very thin copper film used as a negative electrode current collector of a secondary battery, is attracting attention as one of the most important materials in the electronic device industry. Copper foils are usually divided into an electrolytic copper foil and a rolled copper foil depending on the manufacturing method thereof. The electrolytic copper foil and the rolled copper foil have their own advantages and disadvantages, and differs in the preferred usage thereof.

In particular, the electrolytic copper foil is continuously manufactured mainly in a roll-to-roll manner, which provides an advantage that it is possible to mass-produce electrolytic copper foils having a large width and thin thickness. Therefore, the electrolytic copper foil is mainly used in the case of a lithium secondary battery. In recent years, a copper foil having a thickness of 10 μm or less is required, and in particular, a copper foil having a thickness of 8 μm and a copper foil having a thickness of 6 μm are mainly used.

In general, the physical properties of an electrolytic copper foil such as tensile strength, elongation, and roughness are importantly managed. In addition, the thinner the thickness of the electrolytic copper foil, the larger the influence on the physical properties of the copper foil such as tensile strength, elongation, and roughness. Therefore, the relationship between the respective physical properties is considered important.

Various physical property control methods and techniques for realizing basic physical properties of a copper foil have been reported in the related art. In particular, as the method of regulating the physical properties, there has been used a method of adding one or more various kinds of organic compound additives and complexly changing the total addition amount of the additives. For example, Korean Patent Publication No. 1571064 discloses, as a method of manufacturing an electrolytic copper foil by regulating the physical properties thereof, a technique in which a thiourea-based compound additive is used to improve the manufacturing stability and the strength of an electrolytic copper foil, and sulfonic acid, which is a compound containing sulfur atoms, or a metal salt thereof is used to improve the surface glossiness of an electrolytic copper foil. In addition, Korean Patent Publication No. 1126831 discloses a technique of manufacturing an electrolytic copper foil having a minimized relative thickness of a discontinuous layer with respect to a continuous layer by appropriately regulating the composition of an electrolyte, the current density, or the type and content of additives added to the electrolyte.

However, when these additives are used, there is a problem in that it is impossible to selectively control only one physical property of a copper foil. For example, when an additive for regulating elongation among physical properties is used, it not only maintains or improves the elongation, but also affects the change in roughness or surface glossiness, which is another physical property. Therefore, there is also a problem that the addition amount of another additive related to roughness or surface glossiness needs to be changed.

In order to solve these problems, there is a demand for a method of controlling physical properties of an electrolytic copper foil, and a method for manufacturing an electrolytic copper foil, which are capable of easily regulating major physical properties such as elongation, tensile strength, roughness, and the like within the general physical property range of an electrolytic copper foil.

[Prior Art Document]

Patent Document 1: Korean Patent Publication No. 1571064
Patent Document 2: Korean Patent Publication No. 1126831

SUMMARY

The present invention has been made to solve the above problems, and it is an object of the present invention to provide a technique capable of easily regulating major physical properties such as elongation, tensile strength, roughness, and the like within the general physical property range of an electrolytic copper foil. Another object of the present invention is to provide a technique capable of solving the problem of complexly changing the addition amount of additives, simplifying a process of controlling the physical properties of an electrolytic copper foil, and reducing the resultant process cost and additive cost.

A method of controlling physical properties of an electrolytic copper foil includes controlling the physical properties of the electrolytic copper foil including elongation, tensile strength, and roughness by regulating the surface glossiness of the electrolytic copper foil through addition of a surface glossiness agent, wherein the surface glossiness is within a range of 35 to 400 GU (60°).

The elongation is regulated according to the following Equation 1 by regulating the surface glossiness:

$$\text{Equation 1: } E = -3.15 \times 10^{-5} \times G^2 + 0.006 \times G + 7.19$$

where G represents the surface glossiness (GU (60 °), and E represents the elongation (%).

The tensile strength is regulated according to the following Equation 2 by regulating the surface glossiness:

$$\text{Equation 2: } T = 1.25 \times 10^{-4} \times G^2 - 0.104 \times G + 49.8$$

where G represents the surface glossiness (GU (60 °)), and T represents the tensile strength (kgf/mm$^2$).

The roughness is regulated according to the following Equation 3 by regulating the surface glossiness:

$$\text{Equation 3: } R = 7.59 \times 10^{-6} \times G^2 - 0.005 \times G + 1.80$$

where G represents the surface glossiness (GU (60 °)), and R represents the roughness ($\mu$m).

The surface glossiness agent includes at least one of thiophosphoric acid-tris-($\omega$-sulfopropyl)ester trisodium salt, 3-mercapto-1-propanesulfonic acid (MPS), bis-(3-sulfopropyl)-disulfide disodium salt (SPS), and thioglycolic acid, which are sulfonic acids (compounds containing sulfur atoms), or metal salts thereof.

The concentration of the surface glossiness agent is 12 to 40 ppm, preferably 18 to 28 ppm.

A method for manufacturing an electrolytic copper foil according to the present invention includes: dissolving copper ions in sulfate ions to prepare an electrolyte and adding at least one of an elongation agent for maintaining and improving elongation and a tensile strength agent for maintaining and improving tensile strength to the electrolyte; controlling the physical properties of the electrolytic copper foil according to the method of controlling physical properties of an electrolytic copper foil by adding a surface glossiness agent for improving surface glossiness; and forming the electrolytic copper foil by supplying an electric current while supplying the electrolyte containing additives to a foil manufacturing machine in which a positive plate and a negative electrode rotating drum are spaced apart from each other.

The concentration of copper ions in the electrolyte is 70 g/L to 100 g/L, and the concentration of sulfate ions is 80 g/L to 150 g/L.

The elongation agent includes at least one of carboxymethylcellulose, polyethylene glycol, hydroxyethyl cellulose (HEC), octane diol-bis-polyalkylene glycol ether, and polyglycerin, which are nonionic water-soluble polymers.

The tensile strength agent includes at least one of diethylthiourea, ethylenethiourea, acetylenethiourea, 2-thiouracil, which are thiourea-based compounds or compounds in which a thiol group is linked to a nitrogen-containing hetero ring, 2-mercapto-5-benzoimidazole sulfonic acid sodium salt, sodium 3-(5-mercapto-1-tetrazolyl)benzene sulfonate, and 2-mercapto benzothiazole.

The surface glossiness agent includes at least one of thiophosphoric acid-tris-($\omega$-sulfopropyl)ester trisodium salt, 3-mercapto-1-propanesulfonic acid (MPS), bis-(3-sulfopropyl)-disulfide disodium salt (SPS), and thioglycolic acid, which are sulfonic acids (compounds containing sulfur atoms), or metal salts thereof.

The concentration of the surface glossiness agent is 12 to 40 ppm, preferably 18 to 28 ppm.

According to the present invention, it is possible to easily regulate physical properties such as tensile strength, elongation, roughness, and the like by regulating only the surface glossiness of an electrolytic copper foil.

In addition, according to the present invention, by regulating only one physical property, e.g., surface glossiness, of the electrolytic copper foil, it is possible to regulate other physical properties of the electrolytic copper foil to desired values. Therefore, there is no need to complexly regulate the addition amounts of various types of additives to regulate the physical properties of the electrolytic copper foil. Accordingly, it is possible to simplify the process of controlling the physical properties of the electrolytic copper foil, and reduce the process cost and additive cost.

BRIEF DESCRIPTION OF THE DRAWINGS

FIG. 1 is a graph showing the relationship between elongation and surface glossiness according to the present invention.

FIG. 2 is a graph showing the relationship between tensile strength and surface glossiness according to the present invention.

FIG. 3 is a graph showing the relationship between roughness and surface glossiness according to the present invention.

DETAILED DESCRIPTION

A method of controlling physical properties of an electrolytic copper foil, and a method for manufacturing an electrolytic copper foil will now be described in detail with reference to the drawings.

The electrolytic copper foil according to the present invention can be manufactured by using an electrolyte described below.

(Electrolyte Preparation)

In order to manufacture an electrolytic copper foil by electrolysis, an electrolyte is prepared by regulating the concentrations of copper ions and sulfate ions. Additives are contained in the electrolyte to regulate the basic physical properties of the electrolytic copper foil.

The concentration of copper ions in the electrolyte is 70 to 100 g/L, the concentration of sulfate ions is 80 to 150 g/L, and the concentrations of copper ions and sulfate ions vary depending on the manufacturing conditions of the electrolytic copper foil.

In this regard, the raw material of copper ions is a copper-containing raw material such as Cu powder, Cu scrap (waste electric wire, chopping Cu, etc.), copper sulfate, copper oxide, copper carbonate, or the like. All copper raw materials that can be dissolved in sulfuric acid may be used.

The electrolyte contains additives necessary for regulating the physical properties of an electrolytic copper foil. The additives typically include additives for regulating one or more physical properties of elongation, tensile strength, and surface glossiness.

An elongation agent for regulating the elongation of an electrolytic copper foil and a tensile strength agent for regulating the tensile strength of an electrolytic copper foil are added to the electrolyte.

In this regard, the elongation agent for maintaining and improving elongation includes at least one of carboxymethylcellulose, polyethylene glycol, hydroxyethyl cellulose (HEC), octane diol-bis-polyalkylene glycol ether, and polyglycerin, which are nonionic water-soluble polymers.

The tensile strength agent for maintaining and improving tensile strength includes at least one of diethylthiourea, ethylenethiourea, acetylenethiourea, 2-thiouracil, which are thiourea-based compounds or compounds in which a thiol group is linked to a nitrogen-containing hetero ring, 2-mercapto-5-benzoimidazole sulfonic acid sodium salt, sodium 3-(5-mercapto-1-tetrazolyl)benzene sulfonate, and 2-mercapto benzothiazole.

The electrolytic copper foil is manufactured by adding a surface glossiness agent for regulating the surface glossiness of an electrolytic copper foil to the electrolyte. The surface glossiness agent for improving surface glossiness includes at least one of thiophosphoric acid-tris-($\omega$-sulfopropyl)ester trisodium salt, 3-mercapto-1-propanesulfonic acid (MPS), bis-(3-sulfopropyl)-disulfide disodium salt (SPS), and thioglycolic acid, which are sulfonic acids (compounds containing sulfur atoms), or metal salts thereof.

The surface glossiness agent is added to the electrolyte while regulating the concentration thereof to 12 to 40 ppm, or preferably 18 to 28 ppm. If the concentration of the surface glossiness agent is higher than 40ppm, the tensile strength and elongation of an electrolytic copper foil may be lowered, resulting in a problem in that the electrolytic copper foil is easily broken. If the concentration of the surface glossiness agent is less than 12 ppm, the curling of an electrolytic copper foil becomes severe, which makes it difficult to handle an electrolytic copper foil.

**(Method for Manufacturing Electrolytic Copper Foil)**

In a method for manufacturing an electrolytic copper foil, an electrolyte prepared under the following conditions is supplied to a foil manufacturing machine in which a negative electrode rotating drum whose surface is made of Ti and a positive plate formed of a Dimensional Stable Electrode (DSE) electrode plate containing a platinum group element in Ti are spaced apart from each other.

Electrolyte temperature: 45 to 55 degrees C
Flow rate of electrolyte: 1,800 to 3,500 L/hr
Current density: 4,500 to 6,500 A/m$^2$

**(Method of Controlling Physical Property of Electrolytic Copper Foil)**

According to one embodiment of the present invention, the surface glossiness is regulated within the range of 35 to 400 GU (60 °), or preferably 120 to 250 GU (60 °) by adding a surface glossiness agent, controlling the physical properties of an electrolytic copper foil such as tensile strength, elongation, and roughness.

In this case, the physical properties of the electrolytic copper foil are regulated according to Equations 1 to 3 below. Desired values of tensile strength, elongation, and roughness can be obtained by regulating only the surface glossiness, which makes it possible to easily control the physical properties of the electrolytic copper foil.

$$\text{Equation 1: } E = -3.15 \times 10^{-5} \times G^2 + 0.006 \times G + 7.19$$

$$\text{Equation 2: } T = 1.25 \times 10^{-4} \times G^2 - 0.104 \times G + 49.8$$

$$\text{Equation 3: } R = 7.59 \times 10^{-6} \times G^2 - 0.005 \times G + 1.80$$

(where G represents the surface glossiness (GU (60 °)) of the electrolytic copper foil, and E, T, and R represent values of elongation (%), tensile strength (kgf/mm$^2$), and roughness ($\mu$m) of the electrolytic copper foil, respectively.)

The elongation of the electrolytic copper foil controlled by regulating the surface glossiness of the electrolytic copper foil to 120 to 250 GU (60 °) is 6.5 to 9%, the tensile strength is 30 to 40 kgf/mm$^2$, and the roughness is 0.8 to 1.5 $\mu$m.

According to one embodiment of the present invention, an electrolytic copper foil for a negative electrode current collector of a secondary battery can be manufactured.

Hereinafter, a process of deriving a correlation expression between the surface glossiness of the electrolytic copper foil and other physical properties according to the results of each of the experimental examples under different experimental conditions will be described in detail.

**<Experimental Example 1>**

An electrolyte was used which has a composition containing 80 g/L of copper, 100 g/L of sulfuric acid, 10 ppm of an elongation agent (HEC), and 25 ppm of a tensile strength agent (DTE). The electrolyte was supplied to an electrolytic bath equipped with a negative electrode rotating drum (530ø×280w) at a flow rate of 3,000 L/hr while maintaining the temperature of the electrolyte at 54 degrees C. In addition, bis-(3-sulfopropyl)-disulfide disodium salt (SPS), which is a surface glossiness agent, was added to the electrolyte while regulating the concentration thereof to 12 to 40 ppm.

In a copper foil electrolysis process, an electric current was supplied by a constant current method at a current density of 5,769 A/m$^2$, and an electrolytic copper foil having a thickness of 8 $\mu$m was continuously manufactured while rotating a negative electrode rotating drum at a speed of 1.47 m/min.

**<Experimental Example 2>**

In Experimental Example 2, the experiment was conducted under the same conditions as in Experimental Example 1, except that the concentration of the elongation agent is changed within the range of 5 to 15 ppm and the concentration of the tensile strength agent is changed within the range of 20 to 30 ppm.

<Experimental Example 3>

In Experimental Example 3, the experiment was conducted under the same conditions as in Experimental Example 1, except that the concentration of copper ions in the electrolyte is changed within the range of 70 g/L to 100 g/L and the concentration of sulfate ions is changed within the range of 80 g/L to 150 g/L.

**<Experimental Example 4>**

In Experimental Example 4, the experiment was conducted under the same conditions as in Experimental Example 1, except that the current density is changed within the range of 4,500 to 6,500 A/m$^2$ and the rotational speed of the negative electrode rotating drum is changed within the range of 1.3 to 1.6 m/min.

**(Measurement of Elongation, Tensile Strength, and Roughness according to Change in the surface glossiness)**

After heat-treating the electrolytic copper foils obtained in Experimental Examples 1 to 4 at a temperature of 70 degrees C for 18 hours, the surface glossiness, elongation, tensile strength, and roughness of the electrolytic copper foils were measured.

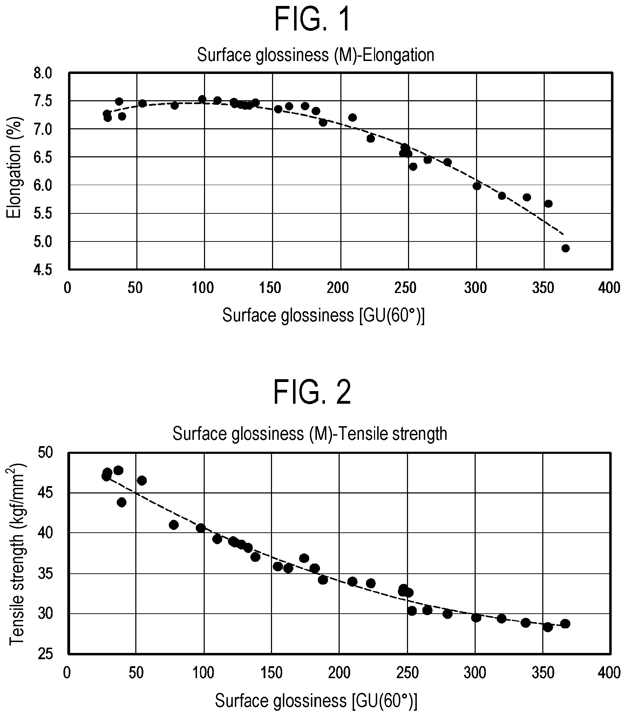

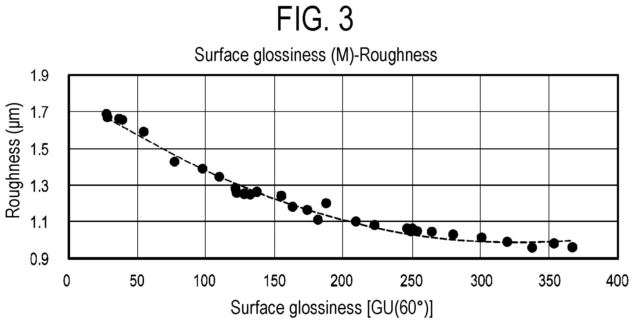

The measurement values of the elongation according to the change in the surface glossiness of the electrolytic copper foil is shown in FIG. 1, the measurement values of the tensile strength according to the change in the surface glossiness of the electrolytic copper foil is shown in FIG. 2, and the measurement values of the roughness according to the change in the surface glossiness of the electrolytic copper foil is shown in FIG. 3.

FIG. 1 is a graph showing the relationship between elongation (y-axis) and surface glossiness (x-axis) indicated by measuring the elongation of the electrolytic copper foils obtained in Experimental Examples 1 to 4. By plotting the physical property data of surface glossiness and elongation, it is possible to derive a correlation between surface glossiness and elongation when the surface glossiness is in the range of 35 to 400 GU (60°). Specifically, the correlation between surface glossiness and elongation was derived by extrapolation (a method of estimating a value outside a variable region when a function value is known only within the variable region). The correlation between surface glossiness and elongation is represented by Equation 1.

$$\text{Equation 1: } E = -3.15 \times 10^{-5} \times G^2 + 0.006 \times G + 7.19$$

(where G represents the surface glossiness (GU (60°)) of the electrolytic copper foil, and E represents the elongation (%) of the electrolytic copper foil.)

FIG. 2 is a graph showing the relationship between tensile strength (y-axis) and surface glossiness (x-axis) indicated by measuring the tensile strength of the electrolytic copper foils obtained in Experimental Examples 1 to 4. By plotting the physical property data of surface glossiness and tensile strength, it is possible to derive a correlation between surface glossiness and tensile strength when the surface glossiness is in the range of 35 to 400 GU (60°). Specifically, the correlation between surface glossiness and tensile strength was derived by extrapolation. The correlation between surface glossiness and tensile strength is represented by Equation 2.

$$\text{Equation 2: } T = 1.25 \times 10^{-4} \times G^2 - 0.104 \times G + 49.8$$

(where G represents the surface glossiness (GU (60°)) of the electrolytic copper foil, and T represents the tensile strength (kgf/mm$^2$) of the electrolytic copper foil.)

FIG. 3 is a graph showing the relationship between roughness (y-axis) and surface glossiness (x-axis) indicated by measuring the roughness of the electrolytic copper foils obtained in Experimental Examples 1 to 4. By plotting the physical property data of surface glossiness and roughness, it is possible to derive a correlation between surface glossiness and roughness when the surface glossiness is in the range of 35 to 400 GU (60°). Specifically, the correlation between surface glossiness and roughness was derived by extrapolation. The correlation between surface glossiness and roughness is represented by Equation 3.

$$\text{Equation 3: } R = 7.59 \times 10^{-6} \times G^2 - 0.005 \times G + 1.80$$

(where G represents the surface glossiness (GU (60°)) of the electrolytic copper foil, and R represents the roughness ($\mu$m) of the electrolytic copper foil.)

In order to evaluate whether the physical properties of the electrolytic copper foil can be regulated according to Equations 1 to 3, the following experiments were conducted.

**(Manufacture of Electrolytic Copper Foil)**

**<Examples 1 to 9>**

An electrolyte was used which has a composition containing 80 g/L of copper, 100 g/L of sulfuric acid, 10 ppm of an elongation agent (HEC), and 25 ppm of a tensile strength agent (DTE). In addition, a surface glossiness agent (SPS) was added to the electrolyte while regulating the concentration thereof to 12 to 40 ppm.

The electrolyte was supplied to an electrolytic bath equipped a negative electrode rotating drum (530ø×280w) at a flow rate of 3,000 L/hr while maintaining the temperature of the electrolyte at 54 degrees C.

In a copper foil electrolysis process, an electric current was supplied by a constant current method at a current density of 5,769 A/m$^2$, and electrolytic copper foils having a thickness of 8 $\mu$m were continuously manufactured while rotating the negative electrode rotating drum at a speed of 1.47 m/min.

**<Examples 10 to 13>**

Electrolytic copper foils having a thickness of 8 $\mu$m were manufactured under the same conditions as in Example 1, except that the concentration of the elongation agent (HEC) and the concentration of the tensile strength agent (DTE) are changed as in Table 1 below.

**<Examples 14 to 17>**

Electrolytic copper foils having a thickness of 8 $\mu$m were manufactured under the same conditions as in Example 1, except that the concentration of the copper and the concentration of the sulfuric acid are changed as in Table 1 below.

**<Examples 18 to 21>**

Electrolytic copper foils having a thickness of 8 $\mu$m were manufactured under the same conditions as in Example 1, except that the current density and the rotational speed of the negative electrode rotating drum are changed as in Table 1 below.

[Table 1]

|  | Cu (g/L) | H$_2$SO$_4$ (g/L) | HEC (ppm) | DTE (ppm) | SPS (ppm) | Current density (A/m$^2$) | Speed (m/min) |
|---|---|---|---|---|---|---|---|
| Ex 1 | 80 | 100 | 10 | 25 | 12 | 5,769 | 1.47 |
| Ex 2 | 80 | 100 | 10 | 25 | 16 | 5,769 | 1.47 |
| Ex 3 | 80 | 100 | 10 | 25 | 22 | 5,769 | 1.47 |
| Ex 4 | 80 | 100 | 10 | 25 | 23 | 5,769 | 1.47 |
| Ex 5 | 80 | 100 | 10 | 25 | 24 | 5,769 | 1.47 |
| Ex 6 | 80 | 100 | 10 | 25 | 25 | 5,769 | 1.47 |
| Ex 7 | 80 | 100 | 10 | 25 | 25.5 | 5,769 | 1.47 |
| Ex 8 | 80 | 100 | 10 | 25 | 26 | 5,769 | 1.47 |
| Ex 9 | 80 | 100 | 10 | 25 | 34 | 5,769 | 1.47 |
| Ex 10 | 80 | 100 | 12 | 28 | 18 | 5,769 | 1.47 |
| Ex 11 | 80 | 100 | 12 | 28 | 28 | 5,769 | 1.47 |
| Ex 12 | 80 | 100 | 8 | 23 | 20 | 5,769 | 1.47 |
| Ex 13 | 80 | 100 | 8 | 23 | 27 | 5,769 | 1.47 |
| Ex 14 | 75 | 95 | 10 | 25 | 19 | 5,769 | 1.47 |
| Ex 15 | 85 | 105 | 10 | 25 | 26.5 | 5,769 | 1.47 |
| Ex 16 | 75 | 95 | 10 | 25 | 17 | 5,769 | 1.47 |
| Ex 17 | 85 | 105 | 10 | 25 | 28.5 | 5,769 | 1.47 |
| Ex 18 | 80 | 100 | 10 | 25 | 15 | 6,154 | 1.57 |
| Ex 19 | 80 | 100 | 10 | 25 | 27.5 | 5,384 | 1.37 |
| Ex 20 | 80 | 100 | 10 | 25 | 21 | 6,154 | 1.57 |
| Ex 21 | 80 | 100 | 10 | 25 | 31 | 5,384 | 1.37 |
| - HEC: Hydroxyethyl cellulose<br>- DTE: Diethylthiourea<br>- SPS: Bis-(3-sulfopropyl)-disulfide-disodium salt | | | | | | | |

**(Measurement of Physical Property of Electrolytic Copper Foil)**

After heat-treating the electrolytic copper foils manufactured in Examples 1 to 21 at a temperature of 70 degrees C for 18 hours, the surface glossiness, elongation, tensile strength, and roughness of the electrolytic copper foils were measured and shown in Table 2 below.

(Surface glossiness Measurement)

The surface glossiness was measured in accordance with JIS B 0601, which is a surface glossiness measurement method, by cutting the electrolytic copper foil into a size of 10 cm × 10 cm, irradiating the surface of the electrolytic copper foil with measurement light at an incident angle of 60 ° along the flow direction (MD direction) of the electrolytic copper foil, and measuring the intensity of the light reflected at a reflection angle of 60 °.

(Tensile Strength/Elongation Measurement)

The tensile strength and elongation were measured in accordance with JIS C 6511 by using an electrolytic copper foil tensile tester (MINOS-005: MTDI). The measurements were conducted at room temperature (25 degrees C ± 10 degrees C), a distance between chucks of 50 mm, and a displacement speed of 50 mm/min.

(Roughness Measurement)

The roughness was measured in accordance with JIS B 0601 (JIS 1994), which is a roughness measurement method. The measurement was conducted in the direction perpendicular to the flow direction (MD direction) of the electrolytic copper foil by using a roughness meter (SJ-411: MITUTOYO).

Through the above measurements, the elongation, tensile strength, and roughness according to the change in surface glossiness were measured, and the elongation, tensile strength, and roughness according to the change in surface glossiness were calculated by using Equations 1 to 3. The errors between the measured values and the calculated values were calculated. The results are shown in Table 2 below. In this regard, the error values between the calculated values and the measured values of the respective physical properties were calculated by ((calculated value/measured value) × 100 - 100) (%).

[Table 2]

| | Surface glossiness [GU (60°)] | Elongation (%) | | | Tensile strength (kgf/mm$^2$) | | | Roughness (μm) | | |
|---|---|---|---|---|---|---|---|---|---|---|
| | | Calcu lated | Measur ed | Error (%) | Calcula ted | Measur ed | Error (%) | Calcula ted | Measur ed | Error (%) |
| Ex 1 | 37 | 7.369 | 7.48 | -1.49 | 46.12 | 47.80 | -3.51 | 1.625 | 1.66 | -2.08 |
| Ex 2 | 98 | 7.475 | 7.52 | -0.59 | 40.81 | 40.50 | 0.76 | 1.383 | 1.39 | -0.51 |
| Ex 3 | 138 | 7.418 | 7.46 | -0.56 | 37.83 | 37.00 | 2.24 | 1.255 | 1.26 | -0.43 |
| Ex 4 | 163 | 7.331 | 7.39 | -0.80 | 36.17 | 35.60 | 1.60 | 1.187 | 1.18 | 0.56 |
| Ex 5 | 174 | 7.280 | 7.40 | -1.62 | 35.49 | 36.90 | -3.83 | 1.160 | 1.17 | -0.87 |
| Ex 6 | 182 | 7.239 | 7.30 | -0.84 | 35.01 | 35.60 | -1.65 | 1.141 | 1.11 | 2.83 |
| Ex 7 | 209 | 7.068 | 7.19 | -1.70 | 33.52 | 33.90 | -1.11 | 1.087 | 1.10 | -1.22 |
| Ex 8 | 223 | 6.962 | 6.81 | 2.23 | 32.82 | 33.70 | -2.60 | 1.062 | 1.08 | -1.63 |
| Ex 9 | 354 | 5.367 | 5.64 | -4.85 | 28.65 | 28.30 | 1.23 | 0.981 | 0.98 | 0.12 |

(continued)

|  | Surface glossiness [GU (60°)] | Elongation (%) | | | Tensile strength (kgf/mm²) | | | Roughness (μm) | | |
|---|---|---|---|---|---|---|---|---|---|---|
|  |  | Calculated | Measured | Error (%) | Calculated | Measured | Error (%) | Calculated | Measured | Error (%) |
| Ex 10 | 121.8 | 7.453 | 7.47 | -0.22 | 38.99 | 38.9 | 0.22 | 1.304 | 1.28 | 1.84 |
| Ex 11 | 251.0 | 6.711 | 6.54 | 2.62 | 31.57 | 32.5 | -2.86 | 1.023 | 1.01 | 1.30 |
| Ex 12 | 127.6 | 7.443 | 7.42 | 0.31 | 38.56 | 38.6 | -0.09 | 1.286 | 1.26 | 2.03 |
| Ex 13 | 248.0 | 6.741 | 6.67 | 1.06 | 31.70 | 33.0 | -3.95 | 1.027 | 1.06 | -3.13 |
| Ex 14 | 123.4 | 7.451 | 7.45 | 0.01 | 38.87 | 38.8 | 0.18 | 1.299 | 1.27 | 2.25 |
| Ex 15 | 247 | 6.750 | 6.54 | 3.21 | 31.74 | 33.4 | -4.98 | 1.028 | 1.05 | -2.09 |
| Ex 16 | 110.0 | 7.469 | 7.50 | -0.42 | 39.87 | 39.2 | 1.72 | 1.342 | 1.34 | 0.14 |
| Ex 17 | 254.0 | 6.682 | 6.54 | 2.17 | 31.45 | 30.3 | 3.79 | 1.020 | 1.05 | -2.89 |
| Ex 18 | 54.8 | 7.424 | 7.45 | -0.35 | 44.48 | 46.5 | -4.35 | 1.549 | 1.59 | -2.59 |
| Ex 19 | 249.0 | 6.731 | 6.64 | 1.37 | 31.65 | 32.9 | -3.79 | 1.026 | 1.03 | -0.43 |
| Ex 20 | 129.8 | 7.438 | 7.41 | 0.38 | 38.41 | 38.4 | 0.02 | 1.279 | 1.25 | 2.31 |
| Ex 21 | 265 | 6.568 | 6.43 | 2.14 | 31.02 | 29.4 | 4.79 | 1.008 | 1.04 | -3.08 |

According to Table 2, if the surface glossiness is regulated within the range of 35 to 400 GU (60°), preferably 120 to 250 GU (60°) by adding bis-(3-sulfopropyl)-disulfide-disodium salt (SPS) as an additive to the electrolyte, the elongation, tensile strength, and roughness, which are physical properties of the electrolytic copper foil, can be calculated using Equations 1 to 3. In particular, Equations 1 to 3 can be used even if the concentration of the tensile strength agent or the elongation agent, the concentration of copper ions and sulfate ions in the electrolyte, or the current density and the rotational speed of the negative electrode rotating drum in the electrolysis process are changed. The errors are within ±5% of the actual measured values. Therefore, the method can be used for actual operations.

By regulating only one physical property, e.g., surface glossiness, of the electrolytic copper foil, it is possible to regulate other physical properties of the electrolytic copper foil to desired values. Therefore, there is no need to complexly regulate the addition amounts of various types of additives to control the physical properties of the electrolytic copper foil. Accordingly, it is possible to simplify the process of controlling the physical properties of the electrolytic copper foil by regulating the surface glossiness, and reduce the process cost and additive cost.

Those skilled in the art will understand that the present invention may be embodied in other specific forms without changing its technical scope or essential features. Therefore, the embodiments described above are exemplary in all respects and should not be construed as being limitative. The scope of the present invention is defined by the appended claims. All changes or modifications derived from the meaning and scope of the claims and equivalent concepts thereof should be construed as being included in the scope of the present invention.

**Claims**

1.    A method of controlling physical properties of an electrolytic copper foil, comprising:

controlling the physical properties of the electrolytic copper foil including elongation, tensile strength and roughness by regulating a surface glossiness of the electrolytic copper foil through addition of a surface glossiness agent,

wherein the surface glossiness is within a range of 35 to 400 GU (60°).

2. The method of Claim 1, wherein the elongation is regulated according to the following Equation 1 by regulating the surface glossiness:

$$\text{Equation 1: } E = -3.15 \times 10^{-5} \times G^2 + 0.006 \times G + 7.19$$

where G represents the surface glossiness (GU (60 °)), and E represents the elongation (%).

3. The method of Claim 1 or 2, wherein the tensile strength is regulated according to the following Equation 2 by regulating the surface glossiness:

$$\text{Equation 2: } T = 1.25 \times 10^{-4} \times G^2 - 0.104 \times G + 49.8$$

where G represents the surface glossiness (GU (60 °)), and T represents the tensile strength (kgf/mm$^2$).

4. The method of Claim 1 or 2, wherein the roughness is regulated according to the following Equation 3 by regulating the surface glossiness:

$$\text{Equation 3: } R = 7.59 \times 10^{-6} \times G^2 - 0.005 \times G + 1.80$$

where G represents the surface glossiness (GU (60 °)), and R represents the roughness (μm).

5. The method of Claim 3, wherein the roughness is regulated according to the following Equation 3 by regulating the surface glossiness:

$$\text{Equation 3: } R = 7.59 \times 10^{-6} \times G^2 - 0.005 \times G + 1.80$$

where G represents the surface glossiness (GU (60 °)), and R represents the roughness (μm).

6. The method of Claim 1, wherein the surface glossiness agent includes at least one of thiophosphoric acid-tris-(ω-sulfopropyl)ester trisodium salt, 3-mercapto-1-propanesulfonic acid (MPS), bis-(3-sulfopropyl)-disulfide disodium salt (SPS), and thioglycolic acid, which are sulfonic acids (compounds containing sulfur atoms), or metal salts thereof.

7. The method of Claim 1, wherein a concentration of the surface glossiness agent is 12 to 40 ppm.

8. The method of Claim 7, wherein a concentration of the surface glossiness agent is 18 to 28 ppm.

9. A method for manufacturing an electrolytic copper foil, comprising:

dissolving copper ions in sulfate ions to prepare an electrolyte and adding at least one of an elongation agent for maintaining and improving elongation and a tensile strength agent for maintaining and improving tensile strength to the electrolyte;

controlling the physical properties of the electrolytic copper foil according to the method of Claim 1 by adding a surface glossiness agent for improving surface glossiness; and

forming the electrolytic copper foil by supplying an electric current while supplying the electrolyte containing additives to a foil manufacturing machine in which a positive plate and a negative electrode rotating drum are spaced apart from each other.

10. The method of Claim 9, wherein a concentration of copper ions in the electrolyte is 70 g/L to 100 g/L, and a concentration of sulfate ions is 80 g/L to 150 g/L.

11. The method of Claim 9 or 10, wherein the elongation agent includes at least one of carboxymethylcellulose, polyethylene glycol, hydroxyethyl cellulose (HEC), octane diol-bis-polyalkylene glycol ether, and polyglycerin, which are nonionic water-soluble polymers.

12. The method of Claim 9 or 10, wherein the tensile strength agent includes at least one of diethylthiourea, ethylenethiourea, acetylenethiourea, 2-thiouracil, which are thiourea-based compounds or compounds in which a thiol group is linked to a nitrogen-containing hetero ring, 2-mercapto-5-benzoimidazole sulfonic acid sodium salt, sodium 3-(5-mercapto-1-tetrazolyl)benzene sulfonate, and 2-mercapto benzothiazole.

13. The method of Claim 9 or 10, wherein the surface glossiness agent includes at least one of thiophosphoric acid-tris-($\omega$-sulfopropyl)ester trisodium salt, 3-mercapto-1-propanesulfonic acid (MPS), bis-(3-sulfopropyl)-disulfide disodium salt (SPS), and thioglycolic acid, which are sulfonic acids (compounds containing sulfur atoms), or metal salts thereof.

14. The method of Claim 9 or 10, wherein a concentration of the surface glossiness agent is 12 to 40 ppm.

15. The method of Claim 14, wherein a concentration of the surface glossiness agent is 18 to 28 ppm.

# FIG. 1

Surface glossiness (M)-Elongation

# FIG. 2

Surface glossiness (M)-Tensile strength

# FIG. 3

Surface glossiness (M)-Roughness

## INTERNATIONAL SEARCH REPORT

| International application No. |
| --- |
| **PCT/KR2023/004288** |

| A. | CLASSIFICATION OF SUBJECT MATTER |
| --- | --- |

**C25D 5/00**(2006.01)i; **C25D 3/38**(2006.01)i; **C25D 1/04**(2006.01)i

According to International Patent Classification (IPC) or to both national classification and IPC

| B. | FIELDS SEARCHED |
| --- | --- |

Minimum documentation searched (classification system followed by classification symbols)

C25D 5/00(2006.01); B32B 15/04(2006.01); B32B 15/20(2006.01); C25D 1/04(2006.01); C25D 3/38(2006.01); H01M 10/052(2010.01); H01M 4/13(2010.01); H04N 5/217(2011.01); H05K 1/09(2006.01); H05K 3/46(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전해(electrolytic), 구리(copper), 동박(copper foil), 인장강도(tensile strength), 연신율(elongation), 조도(roughness), 광택도 조절제(gloss adjuster)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2021-0013059 A (TEX TECHNOLOGY INC.) 03 February 2021 (2021-02-03) See paragraphs [0076]-[0078] and [0085]-[0093] and claim 1. | 1,6-8 |
| A | | 2-5,9-15 |
| A | KR 10-2019-0012922 A (KCF TECHNOLOGIES CO., LTD.) 11 February 2019 (2019-02-11) See claim 10. | 1-15 |
| A | KR 10-2018-0104269 A (YUJININSTEK CORE CO., LTD.) 20 September 2018 (2018-09-20) See claim 1. | 1-15 |
| A | KR 10-2009-0068855 A (SAMYANG CORPORATION) 29 June 2009 (2009-06-29) See paragraphs [0019]-[0020]. | 1-15 |
| A | KR 10-2014-0050541 A (ILJIN MATERIALS CO., LTD.) 29 April 2014 (2014-04-29) See paragraphs [0034], [0040] and [0045]. | 1-15 |

| ☑ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 June 2023** | **21 June 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| | International application No. |
|---|---|
| | **PCT/KR2023/004288** |

**C.     DOCUMENTS CONSIDERED TO BE RELEVANT**

| Category* | Citation of document, with indication, where appropriate, of the relevant passages | Relevant to claim No. |
|---|---|---|
| PX | KR 10-2440711 B1 (KOREA ZINC CO., LTD. et al.) 07 September 2022 (2022-09-07)<br>See claims 1 and 3-15.<br>(This document is a published earlier application that serves as a basis for claiming priority of the present international application.) | 1-15 |

Form PCT/ISA/210 (second sheet) (July 2022)

**INTERNATIONAL SEARCH REPORT**
**Information on patent family members**

International application No.

**PCT/KR2023/004288**

| Patent document cited in search report | | | Publication date (day/month/year) | Patent family member(s) | | | Publication date (day/month/year) |
|---|---|---|---|---|---|---|---|
| KR | 10-2021-0013059 | A | 03 February 2021 | CN | 112543822 | A | 23 March 2021 |
| | | | | CN | 112543822 | B | 16 September 2022 |
| | | | | EP | 3798336 | A1 | 31 March 2021 |
| | | | | JP | 2021-017630 | A | 15 February 2021 |
| | | | | JP | 6667840 | B1 | 18 March 2020 |
| | | | | MY | 185105 | A | 30 April 2021 |
| | | | | RU | 2762281 | C1 | 17 December 2021 |
| | | | | TW | 202108824 | A | 01 March 2021 |
| | | | | TW | I731731 | B | 21 June 2021 |
| | | | | US | 2021-0317590 | A1 | 14 October 2021 |
| | | | | WO | 2021-014778 | A1 | 28 January 2021 |
| KR | 10-2019-0012922 | A | 11 February 2019 | CN | 110997983 | A | 10 April 2020 |
| | | | | CN | 110997983 | B | 21 October 2022 |
| | | | | EP | 3663438 | A1 | 10 June 2020 |
| | | | | JP | 2020-530878 | A | 29 October 2020 |
| | | | | TW | 201910558 | A | 16 March 2019 |
| | | | | TW | I684679 | B | 11 February 2020 |
| | | | | US | 11505873 | B2 | 22 November 2022 |
| | | | | US | 2020-0181790 | A1 | 11 June 2020 |
| | | | | WO | 2019-027174 | A1 | 07 February 2019 |
| KR | 10-2018-0104269 | A | 20 September 2018 | | None | | |
| KR | 10-2009-0068855 | A | 29 June 2009 | KR | 10-1086693 | B1 | 29 November 2011 |
| KR | 10-2014-0050541 | A | 29 April 2014 | KR | 10-1605071 | B1 | 23 March 2016 |
| | | | | TW | 201428112 | A | 16 July 2014 |
| | | | | TW | I504764 | B | 21 October 2015 |
| | | | | WO | 2014-061983 | A1 | 24 April 2014 |
| | | | | WO | 2014-061983 | A9 | 05 February 2015 |
| KR | 10-2440711 | B1 | 07 September 2022 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1571064

- KR 1126831